# EUROPEAN PATENT SPECIFICATION

(11) **EP 1 081 885 B1**
(45) Date of publication and mention of the grant of the patent: **09.03.2005**
(21) Application number: 99921201.2
(22) Date of filing: 20.05.1999
(51) Int. Cl.: H04J 3/04, H04J 3/00, H04L 12/56, H04N 7/08, H04N 5/00

(54) **RECEIVER AND RECEIVING METHOD**
EMPFÄNGER UND EMPFANGSVERFAHREN
PROCEDE ET DISPOSITIF DE RECEPTION

(30) Priority: 20.05.1998 JP 13829698
(43) Date of publication of application: 07.03.2001
(73) Proprietor: Sony Corporation, Tokyo 141-0001 (JP)
(72) Inventor: NODA, Tatsushi, Sony Corp., Tokyo 141-0001 (JP); ADACHI, Hiroshi, Sony Corporation, Tokyo 141-0001 (JP); YAMAMOTO, Yosuke, Sony Corporation, Tokyo 141-0001 (JP)
(74) Representative: Robinson, Nigel Alexander Julian
(86) International application number: PCT/JP1999/002654
(87) International publication number: WO 1999/060736

(56) References cited:
- EP-A- 0 749 244
- EP-A- 0 784 401
- EP-A- 0 835 029
- JP-A- 5 328 321
- JP-A- 9 162 821
- JP-A- 9 186 665
- JP-A- 9 307 826
- JP-A- 10 271 464
- JP-A- 11 004 420
- US-A- 5 502 497

## Description

The present invention relates to a broadcast signal receiving device and method and is suitably applied to a digital broadcasting system.

In the conventional digital broadcasting system, the transmitting end conducts the compression coding to the video and audio signals of each program with the MPEG2 (Moving Picture Experts Group Phase 2) standard, and by dividing the various kinds of data to be broadcasted, such as the obtained compression-coded data, control data and the like, per 184-byte and adding TS (transport stream) header of 4-bytes containing sync code (47H) and PID (packet identification, 13-bits) to its head, forms a 188-byte TS packet.

Furthermore, the transmitting end forms a transport stream by multiplexing thus obtained TS packet for plural programs and the TS packet storing program information, QPSK (Quadrature Phase Shift Keying)-modulates these, and sends out the resultant as a digital broadcasting signal.

On the other hand, the receiving end receives and demodulates the digital broadcasting signal, and extracts the TS packets for the program specified by the user included in the obtained transport stream based on the PID. Then, it decodes video and audio data stored in the TS packets to display obtained pictures and to give sound from a speaker.

Accordingly, in the digital broadcasting system, while the transmitting end can multiplex audio and video data for plural programs for transmission, the user can select and watch a desired program from among these programs at the receiving end.

However, in such the signal receiving device of the digital broadcasting system, the device capable of receiving only one sequence of transport stream is used as a demultiplexer to extract the TS packets for a specified program from the transport stream obtained by demodulating the digital broadcasting signal.

For this reason, in such the signal receiving device, for example, an application for displaying pictures of the plural optional programs on the multi-screen upon receiving plural sequences of digital broadcasting signals or an application for displaying pictures of one optional program on the screen upon receiving plural sequences of digital broadcasting signals need the same number of demultiplexers as the digital broadcasting signals. Therefore, this causes the problem in increasing the circuit size.

European Patent Application Publication No. EP-A-0 749 244 discloses a conventional digital broadcast receiving device. The device, which separates a specified sequence of data (a program) from received plural multiplexed program data, comprises a receiving means for receiving a broadcast signal comprising plural multiplexed program data and extracting a data stream therefrom. A selecting means specifies said sequence of data from the data stream, and separating means separates the sequence of data from the stream.

Other, generally similar, receiving devices are disclosed in EP-A-0 784 401, US Patent No US-A-5 502 497, and EP-A-0 835 029.

Accordingly, the known signal receiving devices have the problem in that it is difficult to improve its operability with minimizing its size, for example, it is difficult to make an application for displaying multiple images on a screen efficiently without increasing the circuit size.

US-A-5,657,092 discloses a broadcast receiver having a picture-in-picture (PIP) function. The receiver includes a first tuner and channel decoder for receiving a video signal for a PIP via an antenna, a first depacketizer for receiving a signal generated in the first tuner and channel decoder and separating and outputting the same, a second tuner and channel decoder for receiving a video signal for a main screen via an antenna, a second depacketizer for receiving a signal generated in the second tuner and channel decoder and separating and
outputting the same, a PIP decoder for receiving the video bit stream of the first depacketizer to reconstruct only the intraframe into a PIP image, a main video decoder for receiving the video bit stream of the second depacketizer and outputting a main image, a multiplexer for multiplexing the outputs of the PIP decoder and the main image decoder, and a video display processor portion for receiving the output of the multiplexer and converting the luminance and chrominance signal into R, G and B signals to then be displayed. The circuit is simplified owing to the adoption of fewer memories than a main video decoder and the cost is reduced.

US-A-5,598,222 discloses a broadcast receiver having a picture-in-picture (PIP) function. The receiver includes a primary tuner/demodulator/transport decoder circuit and a secondary tuner/demodulator/transport decoder circuit. It also includes a "full resolution" MPEG video decoder which decodes the data stream provided by the primary circuit to provide the main picture and a "reduced resolution" MPEG video decoder which decodes the data stream provided by the secondary circuit to provide a reduced resolution picture for display in the main picture. The two decoders share a common memory, reducing the need for additional memory when implementing the PIP function.

According to a first aspect of the invention there is provided a broadcast video signal receiving device comprising: plural receiving means each operative to receive a respective broadcast video signal comprising a stream of coded video data representing plural multiplexed programs and to extract the respective coded video data stream therefrom; selecting means for specifying sequences of coded video data comprising at least parts of said plural data streams extracted by respective ones of said plural receiving means; separating means for receiving said extracted plural video data streams and separating said specified sequences of coded video data from said plural data streams; characterised by means for outputting said specified sequences of coded video data from said plural data streams as a single coded video data stream; and a single video decoder for decoding the single coded video data stream.

According to a second aspect of the invention there is provided a broadcast video signal receiving method comprising the steps of: receiving, by way of each of plural receiving means, a respective broadcast video signal comprising a stream of coded video data representing plural multiplexed programs, and extracting the respective coded video data streams therefrom; specifying sequences of coded data comprising at least parts of said plural video data streams; extracted by respective ones of said plural receiving means; separating said specified sequences of coded video data from said plural data streams; characterised by outputting said specified sequences of coded video data from said plural data streams as a single coded video data stream; and decoding the single coded video data stream using a single video decoder.

This device and method can extract program data of a desired program from among plural data streams each formed by multiplexing plural programs, and allows the display of plural images on the same screen using only one decoder.

The invention will now be further described, by way of illustrative example, with reference to the accompanying drawings, in which:
Fig. 1 is a block diagram showing the structure of a signal receiving device according to an embodiment of the present invention.
Fig. 2 is a block diagram showing the structure of a selected-channel extracting unit.
Fig. 3 is a flowchart explaining a processing procedure to extract (a) selected channel(s).
Fig. 4 is a schematic diagram explaining extracting processing to select one program from each of three transport streams.
Fig. 5 is a schematic diagram explaining extracting processing to select one program from each of two transport streams.
Fig. 6 is a schematic diagram explaining extracting processing in the case where the PIDs are identical when selecting one program from each of two transport streams.
Fig. 7 is a schematic diagram explaining extracting processing to select two programs from one transport stream.
Fig. 8 is a block diagram showing another embodiment.

### Best Mode for Carrying Out the Invention

The present invention will be described in detail with reference to the accompanying drawings.

### (1) Structure of Signal Receiving Device according to the Embodiment of the Present Invention

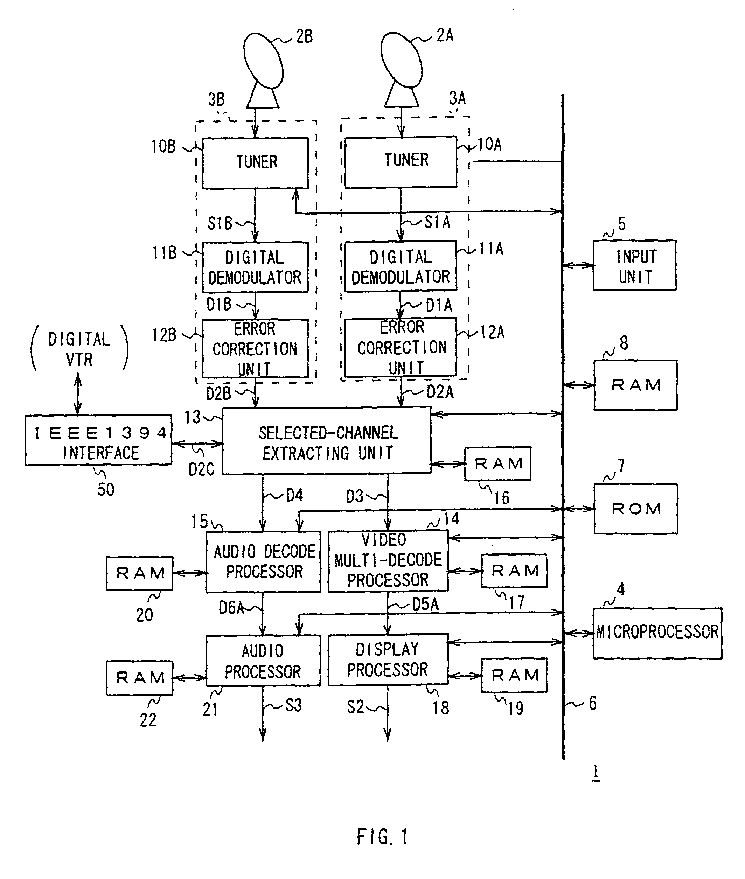

In Fig. 1, 1 generally shows a signal receiving device of the digital broadcasting system according to the embodiment of the present invention. It has first and the second receiver systems 3A and 3B connected respectively to separate antennas 2A and 2B and can simultaneously receive at least two programs with them under the control of a microprocessor 4. Note that, in Fig. 1, two antennas are provided, however, a signal can be received by one antenna. The signal can be divided into two signals to be supplied to the first and second receiving system. That is, providing two antennas is able to receive digital broadcasting signals from two satellites. On the other hand, providing one antenna is able to select signals which correspond to two transponder of a digital broadcasting signal from one satellite.

Channel information of a program desired by a user, inputted with an input unit 5, is supplied to the microprocessor 4 from the input unit 5 through a control bus 6. That is, the input unit 5 is an infrared ray receiving unit, in which the channel information, from a remote controller not shown is inputted thereto and is supplied to the microprocessor 4 through the control bus 6.

The microprocessor 4 controls tuners 10A and 10B of the first and the second receiver systems 3A and 3B according to the supplied channel information based on a program previously stored in a ROM (Read Only Memory) 7. Note that, a RAM (Random Access Memory) 8 serves as a memory means used for processing of the microprocessor.

As a result, under the control of the microprocessor 4, the tuners 10A and 10B select the respectively corresponding digital broadcasting signals from among plural digital broadcasting signals received with the antennas 2A and 2B, and transmit these as selected signals S1A and S1B to the digital demodulators 11A and 11B, respectively.

The digital demodulators 11A and 11B conduct the digital demodulation processing to the supplied selected signals S1A and S1B and transmit the resultant demodulated data D1A and D1B to error correction units 12A and 12B, respectively. Then, the error correction units 12A and 12B apply the prescribed error correction processing to the supplied demodulated data D1A and D1B and transmit the resultant transport stream data (hereinafter, referred to as TS data) D2A and D2B to a selected-channel extracting unit 13.

Under the control of microprocessor 4, the selected-channel extracting unit 13 extracts and multiplexes the TS packet data for pictures and the TS packet data for sound of the specified program from among two sequences of TS data D2A and D2B supplied and the TS data D2C supplied from a digital video tape recorder (VTR) via an IEEE1394 interface 50. Then, the resultant video TS data D3 and audio TS data D4 are transmitted to an video multi-decode processor 14 and an audio decode processor 15, respectively, or are stored in a RAM 16. Note that, the video TS data D3 is a signal generated by multiplexing TS data for one or plural program(s). In addition, the audio TS data D4 is TS data for one program (for example, a program displayed on a main screen of programs displayed on the multi-screen).

Under the control of the microprocessor 4, the video multi-decode processor 14 simultaneously decodes the video TS packet data for one or plural program(s) included in the supplied video TS data D3 with a RAM 17 and transmits the resultant video data D5 for one or plural program(s) to a display processor 18.

The display processor 18, under the control of the microprocessor 4, executes the prescribed signal processing with a RAM 19 for multi-screen displaying, and transmits the obtained display signal S2 to a monitor not shown to display pictures based on the display signal S2 on the multi-screen, in the case where pictures of plural programs are included in the video data D5. Note that, in the case where pictures of only one program are included in the video data D5, the prescribed signal processing is executed so that the picture can be display on the screen all over as a conventional device.

On the other hand, under the control of the microprocessor 4, audio decode processor 15 decodes the supplied audio TS packet data D4 with a RAM 20 and then, transmits the resultant audio data D6 to an audio processor 21.

Then, under the control of the microprocessor 4, the audio processor 21 performs the digital-to-analog conversion on the supplied audio data and outputs it to the speaker not shown, or converts the supplied audio data into an optical digital sound output signal to output.

In this way, this signal receiving device 1 can display pictures of plural programs, specified from two different sequences of digital broadcasting signals and the TS data obtained via the IEEE1394 interface 50 by the user, on the multi-screen by the such a method of dividing the screen, and at the same time, can give sound of any one of the programs from the speaker.

On the other hand, when the user manipulates the remote commander to specify one program and the input unit 5 receives a manipulated signal transmitted from the remote commander, the microprocessor 4 controls only one of the tuners 4A and 4B of the first and second receiver systems 3A and 3B and the IEEE1394 interface 50.

As a result, the selected digital broadcasting signal of the tuner 4A or 4B of the first or the second receiver system 3A or 3B is subjected to the demodulating processing and the error correction by the following digital demodulator 11A or 11B and error correction unit 12A or 12B to restore the transport stream. Then, the transport stream is supplied to the selected-channel extracting unit 13 as TS data D2A or D2B. On the other hand, in the case of specifying the digital signal obtained via the IEEE1394 interface 50, the digital signal obtains TS data D2C in the form of a transport stream. Then, the TS data D2C is supplied to the selected-channel extracting unit 13.

Then, the selected-channel extracting unit 13 separates video TS packets and audio TS packets for the program specified by the user from the TS data D2A or D2B or the TS data D2C obtained via the IEEE1394 interface 50 under the control of the microprocessor 4. The obtained video TS data D3 and audio TS data D4 are supplied to the video multi-decode processor 14 and audio decode processor 15 respectively.

Then, the video TS data D3, after being decoded by the video multi-decode processor 14 under the control of the microprocessor 4, is converted into an analog signal by the display processor 18 and is sent to the monitor as a display signal S2. As a result, the pictures of only one program specified by the user is displayed on the monitor.

Moreover, the audio TS data D4, after being decoded by the audio decode processor 15 under the control of the microprocessor 4, is converted to an analog signal by the audio processor 21 and transmitted to the speaker as an audio signal S3. As a result, the sound of the program specified by the user is given from the speaker.

In this way, this signal receiving device 1 can select only one sequence of TS data from among two sequences of TS data D2A and D2B to be given to the selected-channel extracting unit 13 from the first and the second receiver systems 3A and 3B and the TS data D2C obtained via the IEEE1394 interface 50, to display the pictures and to give sound with respect to the specified program.

### (2) Structure of Selected-channel Extracting unit 13

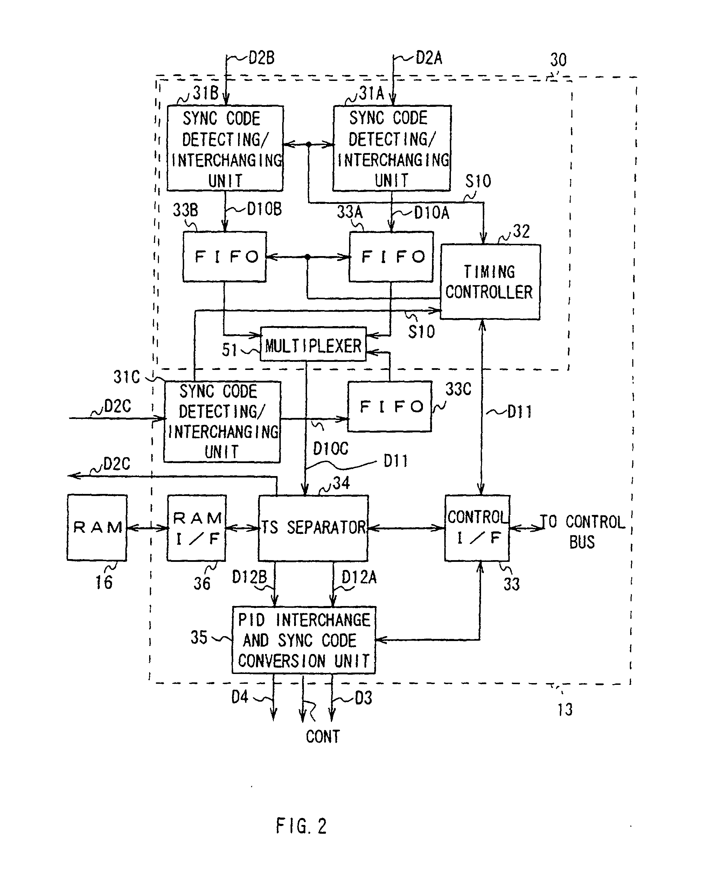

In practice, the selected-channel extracting unit 13 is constructed as shown in Fig. 2, in which the TS data D2A and D2B to be supplied respectively from the error correction units 12A and 12B of the first and second receiver systems 3A and 3B are supplied into the corresponding first or second sync code detecting/interchanging units 31A and 31B of the TS selector/multiplexer 30.

The first and second sync code detecting/interchanging units 31A and 31B detect sync code stored in the TS header of each TS packet included in the respectively supplied TS data D2A and D2B, and transmit a sync code detection signal S10 to a timing controller 32 whenever detecting a sync code.

In addition to this, the first and the second sync code detecting/interchanging units 31A and 31B rewrites the sync code of each TS packet to an ID code for internal processing to be given from the microprocessor 4 through the control bus 6, a control interface 33 and the timing controller 32 and changes identical PIDs (Packet Identification) so that the PIDs of TS packets of each program specified can be identified even if the PIDs are the same. Then, these TS packet data D10A and D10B are sequentially stored in the corresponding first and the second FIFOS (First-in First-out) 33A and 33B.

On the other hand, the timing controller 32, based on the sync code detection signals S10 supplied from the first and second sync code detecting/interchanging units 31A and 13B and the control signal supplied from the microprocessor 4 through the control interface 33, reads out, for example, data in a TS packet unit (in a 188-byte unit) from the first and second FIFOs 33A and 33B alternately with a double clock frequency, multiplexes the first and second TS data D2A and D2B with a multiplexer 51, and transmits the resultant stream data to a TS separator 34 via the multiplexer 51 as selected/multiplexed data D11, in the case where each of plural programs specified by the user is included in each of two transport streams.

On the other hand, the third sync code detecting/interchanging unit 31C detects a sync code stored in the TS header of each TS packet included in the supplied TS data D2C, and transmits the sync code detection signal S10 to the timing controller 32 whenever detecting a sync code.

Further, even when a TS packet included in the inputted TS data D2C has the same PID as a TS packet for each program specified by the first and second sync code detecting/interchanging unit 31A and 31B, the third sync code detecting/interchanging unit 31C rewrites the sync code of each TS packet to the identification code for internal processing supplied from the microprocessor and interchanges the identical PIDs (Packet Identification) so that the PIDs can be identified. Thereafter, it sequentially stores the TS packet data D10C to the corresponding third FIFO (First-In First-Out) 33.

The timing controller 32, based on the sync code detection signal S10 supplied from the third sync code detecting/interchanging unit 31C and the control signal supplied from the microprocessor 4 through the control interface 33, reads, for example, data in the TS packet unit (in a 188-byte unit) from the first, second and third FIFOs 33A, 33B and 33C alternately with a threefold clock frequency, multiplexes the first, second and third TS data D2A, D2B and D2C with the multiplexer 51, and transmits the resultant stream data to the TS separator 34 as selected/multiplexed data D11, in the case where each of plural programs specified by the user are included in each of three transport streams.

In this case, firstly, the TS separator 34 extracts the TS packet having the program information included in the digital broadcasting signal selected at the first and the second receiver systems 3A and 3B from the selected/multiplexed data D11 and the TS packet having the program information included in the TS data D2C obtained through the IEEE1394 interface 50, and transmits these to the microprocessor 4 through the control interface 33 and the control bus 6 in order.

Then, the microprocessor 4 obtains the PID of each video and audio TS packet for the program specified based on the program information to be supplied from the TS separator 34 and transmits it to the TS separator 34 through the control bus 6 and the control interface 33 in order.

Thus, the TS separator 34 extracts TS packets of such as video, audio, control data and data signal for each program specified from among the selected/multiplexed data D11 based on the PID to be given from the microprocessor 4, and transmits the control information and data signal for each program to the microprocessor 4 via the control interface 33 and the same time, transmits the video and audio TS packet data for each program to a PID interchange and sync code conversion unit 35 or stores them in the RAM 16 through the RAM interface 36, as the video TS packet data D12A and audio TS packet data D12B.

In this connection, the TS separator 34 can select TS packets corresponding to the program selected by the user from among the TS data D2A and D3B received by the first and second receiver system 3A and 3B to generate new TS data D2C, and can record it on the digital VTR through the IEEE1394 interface 50. In this case, the TS separator 34 is to output the relation between the current PID and the former one to the digital VTR through the IEEE1394 as interchange information when the TS packet having the PID interchanged exists in the TS data D2C.

Under the control of the microprocessor 4, the PID interchange and sync code conversion unit 35 rewrites the ID code and PID attached by the first, second, and third sync code detecting/interchanging units 31A, 31B and 31C to original synchronization codes with respect to each video and audio TS packet of the supplied video TS packet data D12A and audio TS packet data D12B.

Furthermore, in the case where the PIDs of the video and audio TS packets for plural programs specified by the user are identical, the PID interchange and sync code conversion unit 35 transmits information to specify the channel numbers of TS packets having identical PIDs to the video multi-decode processor 14 or to the audio decode processor 15 through a control line CONT.

On the other hand, in the case where only one program is specified by the user with the input unit 5, under the control of the microprocessor 4, the timing controller 32 reads out the data in the TS packet unit (in a 188-byte unit) with a normal speed only from the corresponding first, second or third FIFO 33A, 33B or 33C based on the sync code detection signal S10 to be given from the corresponding first, second or third sync code detecting/interchanging unit 31A, 31B, 31C and transmits this to the TS separator 34 as the selected/multiplexed data D11.

At this point, the TS separator 34 extracts TS packets having program information from the supplied selected/multiplexed data D11, and transmits these to the microprocessor 4 through the control interface 33 and the control bus 6 in order.

Then, the microprocessor 4 obtains the PID of each video and audio TS packet for programs specified by the user based on the program information to be supplied from the TS separator 34, and outputs this to the TS separator 34 through the control bus 6 and the control interface 33 in order.

Thus, the TS separator 34 extracts each TS packet of such as picture, audio, control data and data signal for the specified program from the selected/multiplexed data D11 based on the PID supplied from the microprocessor 4, and transmits these control information and data signal to the microprocessor 4 through the control interface 33 and the control bus 6 in order and the same time, transmits data of each TS packet for picture and sound to the PID interchange and sync code conversion unit 35 or stores them in the RAM 16 through the RAM interface 36, as the video TS packet data D12A and audio TS packet data D12B.

In the case where only one program is specified by the user, since it is impossible that PIDs are identical, the PID interchange and sync code conversion unit 35 does not interchange a PID. Therefore, the PID interchange and sync code conversion unit 35 transmits the supplied video TS packet data D12A to the video multi-decode processor 14 as the video TS packet stream data D3 as it is and transmits the supplied audio TS packet data D12B to the audio decode processor 15 as the audio TS packet stream data D4 as it is, under the control of the microprocessor 4.

In this way, the selected-channel extracting unit 13 can select and output the video and audio TS packets for plural or one program(s) specified from the TS data D2A and D2B supplied from the error correcting units 12A and 12B in the first and second receiver systems 3A and 3B respectively and the TS data D2C supplied through the IEEE1394 interface 50.

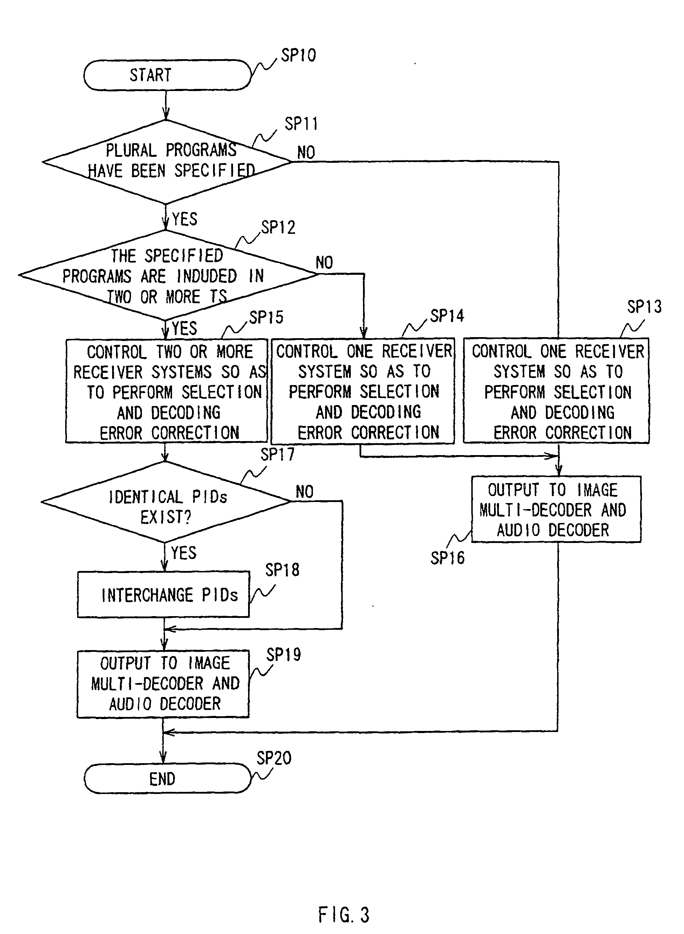

Here, Fig. 3 shows a processing procedure of extracting a selected channel in the selected-channel extracting unit 13. The selected-channel extracting unit 13 controlled by the microprocessor 4 enters the processing procedure from step SP10, and then judges the number of programs specified by the user at following step SP11. When one program is specified, the selected-channel extracting unit 13 proceeds to step SP13 to perform a selection and a decoding error correction by controlling one receiver system (out of the first and second receiver systems 3A and 3B and the third receiver system through the IEEEE1394 interface 50). Note that, the IEEE1394 interface 50 also performs the selection and the decoding error correction as required.

Then, the selected-channel extracting unit 13 outputs the resultant video TS packet stream data D3 and the audio TS packet stream data D4 to the video multi-decoder 14 and the audio decoder 15 at step SP16, and terminate the processing procedure at step SP20.

On the other hand, in the case where plural programs are specified at step SP11, the selected-channel extracting unit 13 proceeds to step SP12. In the case where the specified programs are included only in the TS data obtained through one of three receiver systems (the first and second receiver system 3A and 3B and the third receiver system through the IEEE1394 interface 50), the selected-channel extracting unit 13 obtains a negative result at step SP12. Then, it proceeds to step SP14 to perform the selection and the decoding error correction by controlling one receiver system (out of the first and second receiver systems 3A and 3B and the third receiver system through the IEEE1934 interface 50). In this connection, the IEEE1934 also performs the selection and the error correction as required.

After that, the selected-channel extracting unit 13 outputs the resultant video TS packet stream data D3 and the audio TS packet stream data D4 to the video multi-decoder 14 and the audio decoder 15 at step SP16, and terminate the processing procedure at step SP20.

On the other hand, when a positive result is obtained at step SP12, that is, when the programs specified by the user are included in TS data obtained by two or more receiver systems (two or more out of the first and second receiver systems 3A and 3B and the third receiver system through the IEEE1394 interface 50), the selected-channel extracting unit 13 obtains the positive result at step SP12. Then, it proceeds to step SP15 to perform the selection and the error correction by controlling two or more receiver systems (two or more out of the first and second receiver systems and the third receiver system through the IEEE1394 interface 50) having the TS data specified.

After that, the selected-channel extracting unit 13 proceeds the following step SP17 to judge whether or not there are identical PIDs in the selected TS packets. When the identical PIDs exist, it proceeds to following step SP18 to interchange the PIDs, on the other hand, proceeds to step SP19 when identical PIDs do not exist.

The selected-channel extracting unit 13 outputs the video TS packet stream data D3 and the audio TS packet stream data D4 to the video multi-decoder 14 and the audio decoder 15 at step SP19, and then terminates the processing procedure at step SP20.

### (3) Operation and Effects of the Embodiment

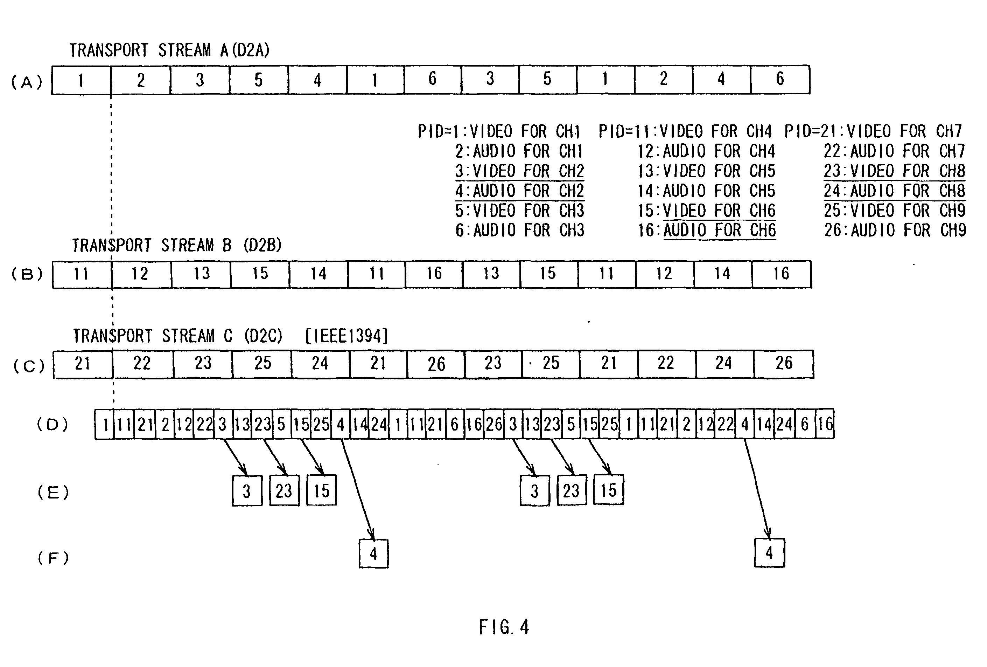

According to the above-mentioned structure, in the case of selecting one program from each of digital broadcasting signals and the TS data reproduced from the digital VTR D2A (Fig. 4(A)), D2B (Fig. 4(B)) and D2C (Fig. 4(C)) respectively corresponding to the specified programs in the first and second receiver systems 3A and 3B and the third receiver system for receiving TS data through the IEEE1394 interface 50 as shown in Fig. 4, the receiving device 1 reads three TS data D2A, D2B and D2C from the FIFOs with the timing controller 32 with a threefold clock. And these data becomes data compressed in a temporal axis direction as shown in Fig. 4(D).

In the TS separator 34, by extracting only TS packets having video data for the selected program, extracts the TS packets (PID = 3) for the channel 2 included in the first TS data D2A, the TS packets (PID = 15) for the channel 6 included in the second TS data D2B, and the TS packets (PID = 23) for the channel 8 included in the third TS data D2C, as shown in Fig. 4(E).

In addition, at this time, the TS separator 34 extracts the TS packets having one piece of audio data for the specified program, to extract the TS packets (PID = 4) for the channel 2 included in the first TS data D2A, for example, as shown in Fig. 4(F).

In this way, one program is selected from each of 3 piece of TS data D2A, D2B, and D3C received by the first to third receiver systems, and the pictures of the total three programs and sound of one program out of three programs can be displayed on the display.

In this case, for example, the screen of the display formed of the CRT (Cathode Ray Tube) displays the picture of each program in one area out of three areas which the screen is divided into, and the sound of one program out of the displayed programs is given from the speaker provided in the display unit.

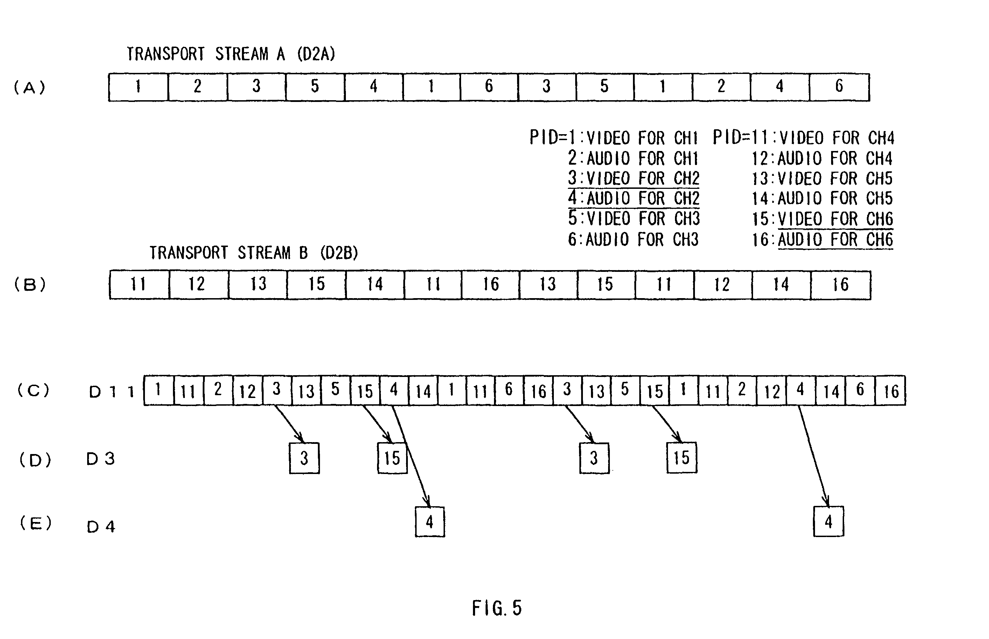

On the contrary, in the case where the user selects programs each included in the TS data D2A or D2B obtained through the two receiver systems (for example, the first receiver system 3A and the second receiver system 3B) out of three receiver systems, the two pieces of TS data D2A (Fig. 5(A)) and D2B (Fig. 5(B)) are read out from the FIFOs with a double clock by the timing controller 32 as shown in Fig. 5. These data are multiplexed as data compressed in the temporal axis direction as shown in Fig. 5(C) and then, are supplied to the TS separator 34.

Then, the TS separator 34, by extracting only the TS packets having video data for the selected programs, extracts the TS packets (PID = 3) for the channel 2 included in the fist TS data D2A and the TS packets (PID = 15) for the channel 6 included in the second TS data D2B, for example, as shown in Fig. 5(D).

Further, at this time, the TS separator 34, by extracting the TS packets having audio data for one of the selected programs, extracts the TS packets (PID = 4) for the channel 2 included in the first TS data D2A, for example, as shown in Fig. 5(E).

In this way, one program can be selected from each of two pieces of TS data D2A and D2B received by the first and second receiver system, and the pictures of the total two programs and the sound of one program out of two can be displayed at the display.

In this case, the picture of each program is displayed in one area of two areas which the screen in divided into, and the sound of one program out of the displayed programs can be given from the speaker provided at the display unit.

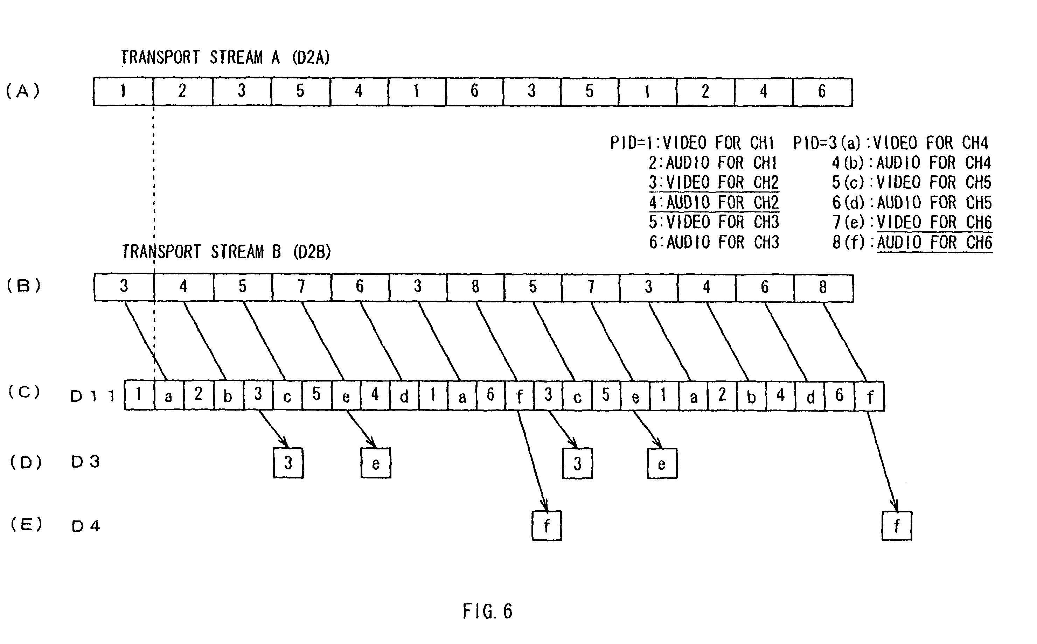

Furthermore, on the contrary, when the user selects a program from each of TS data D2A and D2B obtained by the two receiver system (for example, the first receiver system 3A and the second receiver system 3B) out of three receiver systems, if TS packets having the identical PIDs exist in the selected two TS data D2A and D2B, the two TS data D2A (Fig. 6(A)) and D2B (Fig. (B)) are read out from the FIFOs with the double clock by the timing controller 32 and then are multiplexed as data compressed in the temporal axis direction as shown in Fig. 6(C). In this case, the sync code detecting/interchanging unit 31B has interchanged the PID of the TS packet in the second TS data D2B, which was the same as that in the first TS data D2A, so that the PIDs of the TS packet for the channel 4 in the second TS data D2B has been changed from "PID = 3" to "PID = a", as shown in Fig. 6(C). In this way, the TS data D2B having the changed PID of the TS packet and the TS data D2A having TS packet having the original PID are multiplexed by the multiplexer 51, to obtain a sequence of TS packets having PIDs different from each other, as shown in Fig. 6(C). This sequence of TS packets is supplied to the TS separator 34.

Then, the TS separator 34 extracts only the TS packets having video data for the selected program to extract the TS packets (PID = 3) for the channel 2 included in the first TS data D2A and the TS packet (PID = 7(e)) for the channel 6 included in the second TS data D2B, for example, as shown in Fig. 6(D).

In addition, at this time, the TS separator 34 extracts the TS packet having audio data for one program out of the selected ones to extract the TS packets (PID = 8(f)) for the channel 6 included in the first TS data D2A, for example, as shown in Fig. 6(E).

In this way, one program can be selected from each of two pieces of TS data D2A and D2B received by the fist and second receiver systems, the pictures of the total two programs and the sound of one program out of them can be displayed at the display.

In this case, the picture of each program are displayed in one area out of two areas which the screen is divided into, and the sound of one program out of them being displayed is given from the speaker provided at the display.

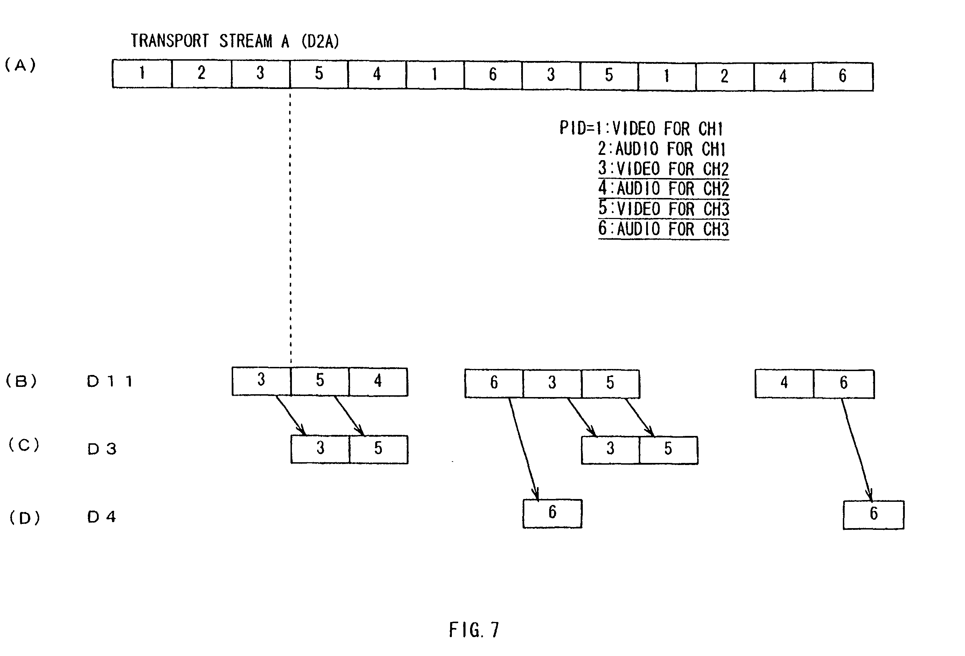

Furthermore, on the contrary, in the case where the user selects two programs included in the TS data D2A obtained by one receiver system (for example, the first receiver system 3A) of three receiver systems, as shown in Fig. 7, one piece of TS data D2A (Fig. 7(A)) is read out from the FIFO with a normal clock by the timing controller 32, and is supplied to the TS separator 34 as data non-compressed in the temporal axis direction as shown in Fig. 7(B).

Then, the TS separator 34 extracts only the TS packets having video data for the selected programs to extract the TS packets (PID = 3) for the channel 2 included in the first TS data D2A and the TS packets (PID = 5) for the channel 3 included in the first TS data D2A as shown in Fig. 7(C), for example.

In addition, at this time, the TS separator 34 extracts the TS packets having audio data for one program out of the selected programs to extract the TS packets (PID = 6) for the channel 3 included in the first TS data D2A, for example, as shown in Fig. 7(D).

In this way, two programs are selected from the one piece of TS data D2A received by the first receiver system, the picture of the total two programs and the sound of one programs out of two can be displayed at the display unit.

In this case, the picture of each program is displayed in one area of two areas which the screen is divided into and the sound of one program out of the programs being displayed are given from the speaker provided at the display unit.

In this way, in the case where the user specifies plural programs, the receiving device 1 selects a digital broadcasting signal or the TS data reproduced from the digital VTR corresponding to the specified program in the first and second receiver systems 3A and 3B and the third receiver system for receiving TS data through the IEEE1394 interface 50, sequentially performs the demodulating and the error correction processing with the corresponding digital demodulator and the error correction unit, and then separates and extracts video TS packets for one or more program(s) and audio TS packets for one program specified by the obtained first, second and third TS data D2A, D2B and D2C.

After that, the obtained video TS packet data D3 for plural programs are simultaneously decoded by the video multi-decode processor 14 and the audio TS packet data D4 for one program is decoded by the audio decode processor 15.

In addition, the pictures for plural programs specified based on the obtained video data D5A and D5B are subjected to the signal processing for display on multi-screen by the display processor 18, and the sound of the specified program is selected by the audio processor 21.

Thus, the receiving device 1 can receive plural programs from the plural digital broadcasting signals and can display them on multi-screen, thereby making it possible to have a high function with respect to display on a screen.

Further, in the receiving device 1, the selected-channel extracting unit 13 can separate the TS packets for programs specified by the user from the TS data D2A, D2B, and D2C correspondingly to the inputs of plurality of TS data D2A, D2B and D2C, so that, for example, it is not necessary to provide plural demultiplexers for extracting TS packets for a program specified by the transport stream, thereby making it possible to construct it simply.

According to the above-mentioned structure, the TS data D2A, D2B, D2C outputted from the first, second, third receiver systems are selected by the selected-channel extracting unit 13 as required, the TS packets having various kinds of data such as pictures and sound for a specified program included in the selected TS data D2A, D2B and D2C are separated and extracted, thereby making it possible to make an application efficient with a simple structure. Thus, it is possible to significantly improve its function with a simple structure.

### (4) Other Embodiments

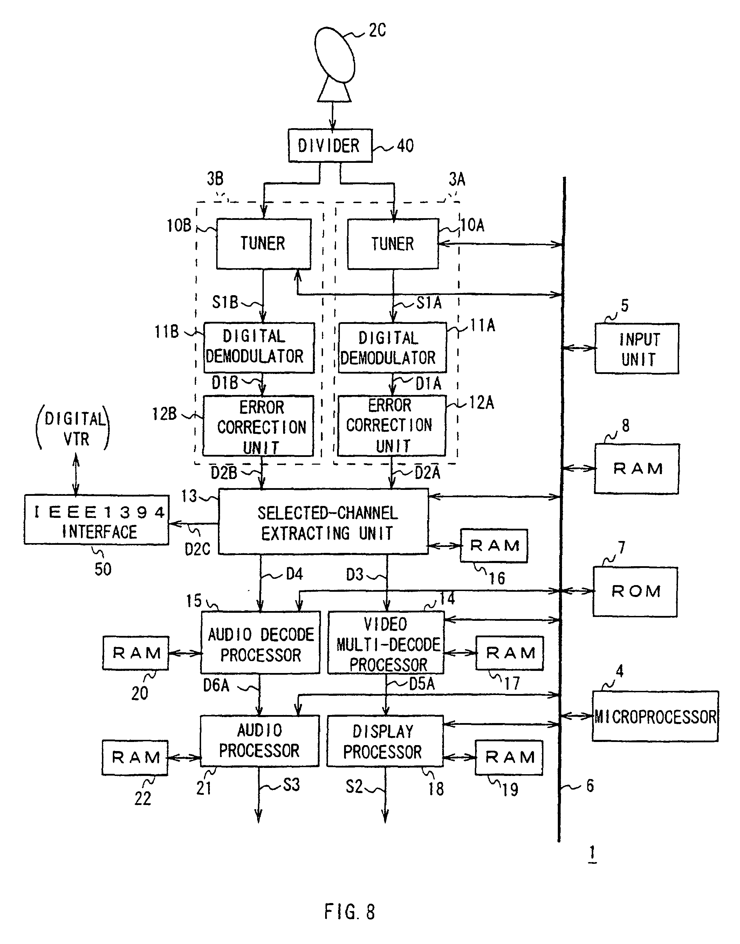

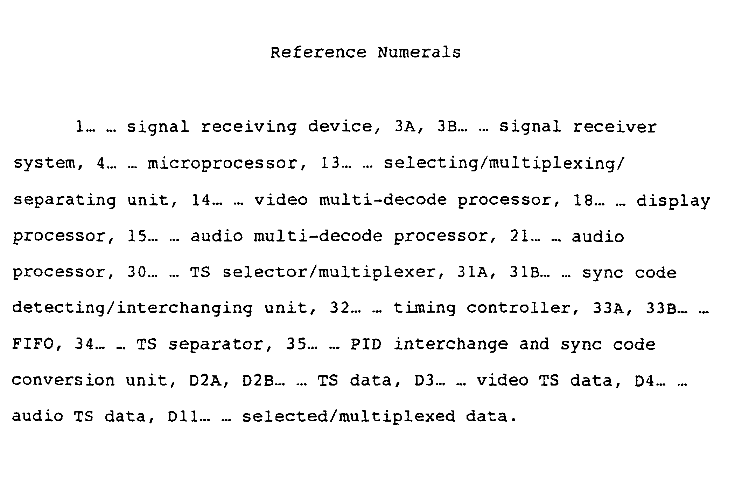

Note that, in the aforementioned embodiment, two antennas are provided. However, as shown in Fig. 8, a signal from one antenna 2C can be divided into two signals by a divider 40, and be supplied to the first and second receiver systems. That is, in the case of providing two antennas, digital broadcasting signals from two satellites can be received, and in the case of providing only one antenna, a signal corresponding to two transponders in the digital broadcasting signal from one satellite can be selected.

Further, in the embodiment described above, the selected-channel extracting unit 13 is constructed as a separating device according to the present invention as shown in Fig. 2. However, the present invention is not only limited to this but various kinds of structures can be applied as the structure of the selected-channel extracting unit 13 as long as the data of the specified sequences can be separated and extracted from the data stream generated by multiplexing plural sequences of data in a prescribed unit.

In this case, in the embodiment described above, the TS selector/multiplexer 30 is comprised of the first, second and third sync code detecting/interchanging units 31A, 31B and 31C, the FIFOs 33A, 33B, and 33C, and the timing controller 32 as the selecting means for receiving plural data streams and selecting the corresponding part or all of the data streams from among the received plural data streams, as shown in Fig. 2. However, the present invention is not limited thereto and other various kinds of structures can be applied.

Furthermore, in the embodiment described above, the TS separator 34 serving as the separating/extracting means for separating and extracting data (video data and audio data) of the sequences specified by the user (pictures and sound of the specified program) included in the TS data D2A, D2B and D2C is placed at the stage following the FIFOs 33A, 33B and 33C and the timing controller 32, the multiplexer 51 serving as the multiplexing means for multiplexing these data. However, the present invention is not only limited to this but also the TS separator 34 can be placed at the stage preceding the FIFOs 33A, 33B, 33C, the timing controller 32 and the multiplexer 51, and the same effects as the above embodiment can be obtained.

Furthermore, in the embodiment described above, the selected-channel extracting unit 13 multiplexes and outputs video and audio data for the programs specified by the user in the form of a TS packet. However, the present invention is not only limited to this but also video and audio data for the programs specified by the user can be multiplexed and outputted in the form of a signal, such as ES (Elementary Stream) and PES (Packetized Elementary Stream). In this case, the signal receiving device can be so constructed that the selected-channel extracting unit 13 outputs a control signal so as to make the video multi-decode processor 14 and the audio decode processor 15 decide what program the video TS data D3 and audio TS data D4 to be supplied at that moment belong to.

Furthermore, in the embodiment described above, the selected-channel extracting unit 13 is constructed so as to cope with the inputs of three transport streams. However, the present invention is not only limited to this but also, the selected-channel extracting unit 13 can cope with four or more transport streams as long as it is constructed so as to receive plural data streams, to select corresponding part or all data streams from among the received plural data streams, and to separate and extract data of a specified sequence included in the selected data streams.

Furthermore, in the embodiment described above, identical PIDs of TS packets are interchanged. However, the present invention is not limited thereto but also, for example, with respect to a TS packet having another identical PID, a flag to specify the channel number can be added to its header to ouput the TS packet from the selected-channel extracting unit 13 through a control line CONT.

Furthermore, in the embodiment described above, the receiving device according to the present invention is applied to a receiving device in a digital broadcasting system. However, the present invention is not limited thereto but also can be applied to other various types of receiving device such as a receiving device for the cable television broadcasting. In this case, a program of a different broadcasting system can be extracted by making a receiver system cope with the different broadcasting system (for example, the CS (Communications Satellite) broadcasting for distributing programs via a communications satellite, the BS (Broadcasting Satellite) broadcasting for distributing program via a broadcasting satellite), the cable television broadcasting, or the digital broadcasting for distributing with a ground wave).

### Industrial Applicability

The present invention can be utilized for the case of simultaneously displaying programs, distributed with plural broadcasting system such as the CS broadcasting, the BS broadcasting, or the cable television broadcasting, on one monitor.

## Claims

1. A broadcast video signal receiving device (1) comprising:
plural receiving means (3A 10A, 11A, 12A, 3B, 10B, 11B, 12B) each operative to receive a respective broadcast video signal comprising a stream of coded video data representing plural multiplexed programs and to extract the respective coded video data stream (D2A, D2B) therefrom;
selecting means (4, 5, 30) for specifying sequences of coded video data comprising at least parts of said plural data streams (D2A, D2B) extracted by respective ones of said plural receiving means;
separating means (34) for receiving said extracted plural video data streams and separating said specified sequences of coded video data from said plural data streams; **characterised by**
means (35) for outputting said specified sequences of coded video data from said plural data streams as a single coded video data stream (D3); and
a single video decoder (14) for decoding the single coded video data stream (D3).

2. A broadcast signal receiving device according to claim 1, comprising multiplexing means (51) provided at a stage preceding said separating means (34) for multiplexing said plural data streams (D2A, D2B) extracted by said plural receiving means (3A, 3B).

3. A broadcast signal receiving device according to claim 1 or claim 2, wherein each said data stream (D2A, D2B) is formed of said plural program data packetized and multiplexed per prescribed unit, and said separating means (34) is operative to output said specified sequence of data in the form of packetized data.

4. A broadcast signal receiving device according to any one of the preceding claims, comprising a digital interface means (50) for receiving a data stream (D2C) from an external device, wherein said selecting means (30) is operative to specify part or all of said sequence of data from among said plural data streams (D2A, D2B) extracted by said plural receiving means (3A, 3B) and said data stream (D2C) received by said digital interface means (50), and wherein said separating means (34) is connected to receive said extracted plural data streams (D2A, D2B) and said data stream (D2C) received by said digital interface means (50).

5. A broadcast signal receiving device according to claim 1, comprising multiplexing means provided at a stage following said separating means for multiplexing said separated sequence of data.

6. A broadcast video signal receiving method comprising the steps of:
receiving, by way of each of plural receiving means (3A, 3B), a respective broadcast video signal comprising a stream of coded video data representing plural multiplexed programs, and extracting the respective coded video data streams (D2A, D2B) therefrom;
specifying (4, 5, 30) sequences of coded data comprising at least parts of said plural video data streams (D2A, D2B) extracted by respective ones of said plural receiving means; and
separating (34) said specified sequences of coded video data from said plural data streams;
**characterised by** outputting (35) said specified sequences of coded video data from said plural data streams as a single coded video data stream (D3); and
decoding (14) the single coded video data stream using a single video decoder.

7. A broadcast signal receiving method according to claim 6, comprising multiplexing said extracted plural data streams before said separating step (34).

8. A broadcast signal receiving method according to claim 6 or claim 7, wherein each said data stream (D2A, D2B) is formed of said plural program data packetized and multiplexed per prescribed unit, and said separating step (34) outputs said specified sequence of data in the form of packetized data.

9. A broadcast signal receiving method according to any one of claims 6 to 8, comprising receiving a data stream (D2C) from an external device, wherein said selecting step (30) comprises specifying part or all of said sequence of data from among said extracted plural data streams (D2A, D2B) and said data stream (D2C) received from said external device, and wherein said separating step (34) comprises separating said specified sequence of data from said extracted plural data stream (D2A, D2B) and said data stream (D2C) received from said external device.

10. A broadcast signal receiving method according to claim 6, comprising multiplexing said separated sequence of data.

## Patentansprüche

1. Rundfunkvideosignal-Empfangsgerät (1)
mit einer Mehrzahl von Empfangseinrichtungen (3A, 10A, 11A, 12A, 3B, 10B, 11b; 12B) zum Empfangen jeweils eines Rundfunk-Videosignals, das einen Strom von kodierten Videodaten umfaßt, die eine Mehrzahl von gemultiplexten Programmen repräsentieren, sowie zum Extrahieren des jeweiligen kodierten Datenstroms (D2A, D2B) aus diesem,
mit einer Auswahleinrichtung (4, 5, 30) zum Spezifizieren von Sequenzen von kodierten Videodaten, die zumindest Teile der von den betreffenden Exemplaren der Mehrzahl von Empfangseinrichtungen extrahierten Mehrzahl von Datenströmen (D2A, D2B) enthalten,
mit einer Trenneinrichtung (34) zum Aufnehmen der Mehrzahl von extrahierten Videodatenströme und zum Abtrennen der spezifizierten Sequenzen von kodierten Videodaten aus der Mehrzahl von Datenströmen,
**gekennzeichnet durch**
eine Einrichtung (35) zur Ausgabe der spezifizierten Sequenzen von kodierten Videodaten aus der Mehrzahl von Datenströmen als einen einzelnen kodierten Datenstrom (D3) und
einen einzigen Videodekodierer (14) zum Dekodieren des einzelnen kodierten Datenstroms (D3).

2. Rundfunksignal-Empfangsgerät nach Anspruch 1, mit einer in einer der Trenneinrichtung (34) vorangehenden Stufe angeordneten Muliplexereinrichtung (5) zum Muliplexen der von der Mehrzahl von Empfangseinrichtungen (3A, 3B) extrahierten Mehrzahl von Datenströmen (D2A, D2B).

3. Rundfunksignal-Empfangsgerät nach Anspruch 1 oder 2, bei dem jeder der genannten Datenströme (D2A, D2B) aus der Mehrzahl von Programmdaten gebildet ist, die in vorgeschriebenen Einheiten paketiert und gemultiplext sind, wobei die Trenneinrichtung (34) die spezifizierte Sequenz von Daten in Form von paketierten Daten ausgibt.

4. Rundfunksignal-Empfangsgerät nach einem der vorhergehenden Ansprüche, mit einer digitalen Interface-Einrichtung (50) zur Aufnahme eines Datenstroms (D2C) aus einem externen Gerät, wobei die Auswahleinrichtung (30) einen Teil der oder die ganze Sequenz von Daten aus der von der Mehrzahl von Empfangseinrichtungen (3A, 3B) extrahierten Mehrzahl von Datenströmen (D2A, D2B) und dem aus der digitalen Interface-Einrichtung (50) empfangenen Datenstrom (D2C) spezifiziert, und bei dem die Trenneinrichtung (34) so angeordnet ist, daß sie die Mehrzahl von extrahierten Datenströmen (D2A, D2B) und den aus der digitalen Interface-Einrichtung (50) empfangenen Datenstrom (D2C) aufnimmt.

5. Rundfunksignal-Empfangsgerät nach Anspruch 1, mit einer in der auf die Trenneinrichtung folgenden Stufe angeordneten Muliplexereinrichtung zum Muliplexen der abgetrennten Sequenz von Daten.

6. Rundfunkvideosignal-Empfangsverfahren mit den Verfahrensschritten:
Empfangen eines betreffenden Rundfunk-Videosignals, das einen Strom von kodierten Videodaten enthält, die eine Mehrzahl von gemultiplexten Programmen repräsentieren, mit Hilfe jeweils einer aus einer Mehrzahl von Empfangseinrichtungen (3A, 3B), und Extrahieren der betreffenden kodierten Videodatenströme (D2A, D2B) aus diesem,
Spezifizieren (4, 5, 30) von Sequenzen von kodierten Videodaten, die zumindest Teile der von den betreffenden Exemplaren der Mehrzahl von Empfangseinrichtungen extrahierten Mehrzahl von Datenströmen (D2A, D2B) enthalten,
Abtrennen (34) der spezifizierten Sequenzen von kodierten Videodaten aus der Mehrzahl von Datenströmen,
**gekennzeichnet durch**
das Ausgeben (35) der spezifizierten Sequenzen von kodierten Videodaten aus der Mehrzahl von Datenströmen als einen einzelnen kodierten Datenstrom (D3) und
das Dekodieren (14) des einzelnen kodierten Datenstroms unter Verwendung eines einzelnen Videodekodierers.

7. Rundfunkvideosignal-Empfangsverfahren nach Anspruch 6, das das Multiplexen der Mehrzahl von extrahierten Datenströmen vor dem Verfahrensschritt des Trennens (34) umfaßt.

8. Rundfunkvideosignal-Empfangsverfahren nach Anspruch 6 oder 7, bei dem jeder der genannten Datenströme (D2A, D2B) aus der Mehrzahl von Programmdaten gebildet ist, die in vorgeschriebenen Einheiten paketiert und gemultiplext sind, und bei dem der Verfahrensschritt des Abtrennens (34) die spezifizierte Sequenz von Daten in Form von paketierten Daten ausgibt

9. Rundfunkvideosignal-Empfangsverfahren nach einem der Ansprüche 6 bis 8, das das Empfangen eines Datenstroms (D2C) aus einem externen Gerät umfaßt, wobei der Verfahrensschritt des Auswählens (30) das Spezifizieren eines Teils der oder der ganzen Sequenz von Daten aus der von der Mehrzahl von Empfangseinrichtungen (3A, 3B) extrahierten Mehrzahl von Datenströmen (D2A, D2B) und des aus der digitalen Interface-Einrichtung (50) empfangenen Datenstroms (D2C) umfaßt, und bei dem der Verfahrensschritt des Abtrennens (34) das Abtrennen der spezifizierten Sequenz von Daten aus der Mehrzahl von extrahierten Datenströmen (D2A, D2B) und des aus der digitalen Interface-Einrichtung (50) empfangenen Datenstroms (D2C) umfaßt.

10. Rundfunkvideosignal-Empfangsverfahren nach Anspruch 6, das das Multiplexen der abgetrennten Sequenz von Daten umfaßt.

## Revendications

1. Dispositif de réception de signal vidéo de diffusion (1) comprenant :
une pluralité de moyens de réception (3A, 10A, 11A, 12A, 3B, 10B, 11B, 12B) chacun fonctionnel pour recevoir un signal vidéo de diffusion respectif comprenant un flux de données vidéo codées représentant la pluralité de programmes multiplexés et pour extraire le flux de données vidéo codées respectif (D2A, D2B) de celui-ci ;
un moyen de sélection (4, 5, 30) pour spécifier des séquences de données vidéo codées comprenant au moins des parties de ladite pluralité de flux de données (D2A, D2B) extraites par ceux respectifs de ladite pluralité de moyens de réception ;
un moyen de séparation (34) pour recevoir ladite pluralité de flux de données vidéos extraites et séparer lesdites séquences spécifiées de données vidéo codées à partir de ladite pluralité de flux de données ; **caractérisé par**
un moyen (35) pour fournir lesdites séquences spécifiées de données vidéo codées à partir ladite pluralité de flux de données comme un flux de données vidéo codées unique (D3) ; et
un décodeur vidéo unique (14) pour décoder le flux de données vidéo codées unique (D3).

2. Dispositif de réception de signal de diffusion selon la revendication 1, comprenant un moyen de multiplexage (51) fourni à un étage précédent ledit moyen de séparation (34) pour multiplexer ladite pluralité de flux de données (D2A, D2B) extraits par lesdits plusieurs moyen de réception (3A, 3B).

3. Dispositif de réception de signal de diffusion selon la revendication 1 ou la revendication 2, dans lequel chaque dit flux (D2A, D2B) est formé de ladite pluralité de données de programme mises en paquets et multiplexées par unité prescrite, et ledit moyen de séparation (34) est fonctionnel pour fournir ladite séquence de données sous la forme de données mises en paquets.

4. Dispositif de réception de signal de diffusion selon l'une quelconque des revendications précédentes, comprenant un moyen d'interface numérique (50) pour recevoir un flux de données (D2C) à partir d'un dispositif externe, dans lequel ledit moyen de sélection (30) est fonctionnel pour spécifier une partie ou toute ladite séquence de données à partir de ladite pluralité de flux de données extraites par ladite pluralité de moyen de réception (3A, 3B) et ledit flux de données (D2C) reçu par ledit moyen d'interface numérique (50), et dans lequel ledit moyen de séparation (34) est raccordé pour recevoir ladite pluralité de flux de données extraites (D2A, D2B) et ledit flux de données (D2C) reçu par ledit moyen d'interface numérique (50).

5. Dispositif de réception de signal de diffusion selon la revendication 1, comprenant un moyen de multiplexage fourni à un étage après ledit moyen de séparation pour multiplexer ladite séquence séparée de données.

6. Procédé de réception de signal vidéo de diffusion comprenant les étapes de :
réception, au moyen de chacun de la pluralité de moyens de réception (3A, 3B), un signal vidéo de diffusion respectif comprenant un flux de données vidéo codées représentant la pluralité de programmes multiplexés, et l'extraction des flux de données vidéo codées respectifs (D2A, D2B) de celui-ci ;
spécification (4, 5, 30) de séquences de données codées comprenant au moins des parties de ladite pluralité de flux de données vidéo (D2A, D2B) extraites par ceux respectifs de ladite pluralité de moyens de réception ; et
séparation (34) desdites séquences spécifiées des données vidéo codées à partir de ladite pluralité de flux de données ;
**caractérisé par** la fourniture (35) desdites séquences spécifiées de données vidéo codées à partir de ladite pluralité de flux de données comme un flux de données vidéo codées unique (D3) ; et
décodage (14) du flux de données codées unique en utilisant un décodeur vidéo unique.

7. Procédé de réception de signal de diffusion selon la revendication 6, comprenant le multiplexage de ladite pluralité de flux de données extraites avec ladite étape de séparation (34).

8. Procédé de réception de signal de diffusion selon la revendication 6 ou la revendication 7, dans lequel ledit flux de données (D2A, D2B) est formé ladite pluralité de données de programmes mises en paquets et multiplexées par unité prescrite, et ladite étape de séparation (34) fournit ladite séquence spécifiée de données sous la forme de données mises en paquets.

9. Procédé de réception de signal de diffusion selon l'une quelconque des revendications 6 à 8, comprenant la réception d'un flux de données (D2C) à partir d'un dispositif externe, dans lequel ladite étape de sélection (30) comprend la spécification d'une partie ou toute ladite séquence de données à partir de ladite pluralité de flux de données extraits (D2A, D2B) et dudit flux de données (D2C) reçu à partir dudit dispositif externe, et dans lequel ladite étape de séparation (34) comprend la séparation de ladite séquence spécifiée de données à partir de ladite pluralité de flux de données extraits (D2A, D2B) et dudit flux de données (D2C) reçu à partir dudit dispositif externe.

10. Procédé de réception de signal de diffusion selon la revendication 6, comprenant le multiplexage de ladite séquence séparée de données.
